# EUROPÄISCHE PATENTSCHRIFT

(11) **EP 0 687 584 B1**
(45) Veröffentlichungstag und Bekanntmachung des Hinweises auf die Patenterteilung: **12.08.1998**
(21) Anmeldenummer: 95108701.4
(22) Anmeldetag: 07.06.1995
(51) Int. Cl.: B60H 1/03, F01P 3/20, F24J 3/00

(54) **Heizvorrichtung für Kraftfahrzeuge**
Heating means for vehicles
Installation de chauffage pour véhicules

(30) Priorität: 15.06.1994 DE 4420841
(43) Veröffentlichungstag der Anmeldung: 20.12.1995
(73) Patentinhaber: Martin, Hans, 70174 Stuttgart (DE)
(72) Erfinder: Martin, Hans, 70174 Stuttgart (DE)
(74) Vertreter: Heumann, Christian, Dipl.-Ing.

(56) Entgegenhaltungen:
- DE-A- 3 147 468
- DE-A- 3 832 966
- FR-A- 2 266 122
- FR-A- 2 674 797
- GB-A- 2 003 265
- US-A- 4 277 020

## Beschreibung

Die Erfindung bezieht sich auf eine Heizvorrichtung, insbesondere für Kraftfahrzeuge nach dem Oberbegriff des Patentanspruches 1. Eine solche Heizvorrichtung wurde durch die **DE-A-38 32 966** bekannt, wobei die Erfindung allerdings nicht auf Kraftfahrzeuge mit flüssigkeitsgekühlten Brennkraftmaschinen beschränkt ist, sondern auch für Elektrofahrzeuge und Fahrzeuge mit sogenanntem Hybridantrieb, d.h. mit einem kombinierten Antrieb aus Elektromotor und Verbrennungsmotor, anwendbar ist.

Die bekannte Heizvorrichtung nach der DE-A-38 32 966 offenbart eine Zusatzheizvorrichtung für flüssigkeitsgekühlte Brennkraftmaschinen, welche Wärme durch Flüssigkeitsreibung erzeugt und diese an das Kühlwasser der Brennkraftmaschine abführt. Die Wärme wird durch einen topfförmigen Rotor erzeugt, der ständig von der Brennkraftmaschine angetrieben wird und in einer teilweise mit viskosem Medium gefüllten Arbeitskammer umläuft. Neben dieser Arbeitskammer befindet sich eine Vorratskammer, die über eine Zulauf- und eine Rücklauföffnung mit der Arbeitskammer verbunden ist. Die Regelung der Heizvorrichtung erfolgt über ein temperaturgesteuertes Ventil, welches den Zulauf des viskosen Mediums aus der Vorratskammer in die Arbeitskammer steuert. Bei Unterschreiten einer bestimmten Kühlmitteltemperatur öffnet das Ventil, und viskoses Medium strömt in die Arbeitskammer. Bei Überschreiten einer bestimmten Kühlmitteltemperatur schließt das Ventil, und das viskose Medium wird aus der Arbeitskammer abgepumpt. Allerdings läßt sich nicht das gesamte Öl aus der Arbeitskammer abpumpen, d.h. das verbleibende Öl erzeugt, infolge des ständig laufenden Antriebes des Rotors, immer noch eine gewisse Restwärme, die an das Kühlwasser abgegeben wird, was bei beendeter Warmlaufphase des Motors nicht erwünscht ist. Ebenso bedeutet dieser ständige, reibungsbehaftete Leerlauf einen Leistungsverlust für die Brennkraftmaschine.

Im übrigen erscheint die Funktion dieser bekannten Heizvorrichtung aus folgenden Gründen fraglich: Da der (dynamische) Druck im Arbeitsspalt höher als der durch die Schwerkraft erzeugte Druck auf das Öl außerhalb des Arbeitsspaltes ist, läßt sich der Arbeitsspalt (der die Wärme erzeugt) nicht kontinuierlich füllen, zumal das Öl auch noch ständig abgepumpt wird. Das Öl gelangt also bei geöffnetem Ventil nur in unkontrollierter Weise, d.h. zufällig in den Arbeitsspalt und erzeugt daher praktisch keine Wärme.

Durch die **DE-A-31 47 468** wurde eine weitere Heizvorrichtung bekannt, die nach dem Prinzip der hydrodynamischen Bremse arbeitet, wobei das Flügelrad der Bremse über einen Keilriementrieb von der Brennkraftmaschine angetrieben wird und die Ein- und Ausschaltung der Bremse über eine Elektromagnetkupplung erfolgt. Die hydrodynamische Bremse hat unter anderem den Nachteil, daß die Heizwirkung bei niedrigen Antriebsdrehzahlen relativ gering ist, was gerade beim Leerlauf der Maschine in der Warmlaufphase von Nachteil ist.

Aufgabe der Erfindung ist es, eine Heizvorrichtung der eingangs genannten Art für Kraftfahrzeuge zu schaffen, die einfach und raumsparend im Aufbau und wirtschaftlich herstellbar ist und die dennoch mit einem guten Wirkungsgrad arbeitet, insbesondere bei niedrigen Motordrehzahlen.

Diese Aufgabe wird durch die Merkmale des Patentanspruches 1 gelöst. Durch die erfindungsgemäße Heizvorrichtung wird mit einfachen Mitteln und geringem Aufwand eine wirksame Heizung geschaffen, die sowohl bei Fahrzeugen mit flüssigkeitsgekühlter Brennkraftmaschine als auch bei solchen mit elektromotorischem oder mit Hybridantrieb verwendbar ist. Die Heizvorrichtung weist nur **eine** Kammer auf, die geschlossen und **vollständig** mit viskosem Medium gefüllt ist, und kann bei Bedarf durch eine geeignete Kupplung zugeschaltet und bei Nichtbedarf getrennt werden. Der Erfindung liegt die Erkenntnis zugrunde, daß eine unvollständig gefüllte, stehende Arbeitskammer, insbesondere mit Vorratskammer nicht funktionsfähig ist, weil der Arbeitsspalt aufgrund der sich einstellenden Druckverhältnisse nicht kontrollierbar befüllt werden kann. Erst durch die vollständige Befüllung der Arbeitskammer wird die notwendige Benetzung der Arbeitsspalte und ein konstanter Befüllungsgrad erreicht, der im Betrieb ständig aufrecht erhalten wird. Die erfindungsgemäße Heizvorrichtung verzichtet also auf eine Vorratskammer und die damit verbundene Füllungsregelung und verwendet statt dessen zur Steuerung eine Schaltkupplung. Dadurch ist die Heizvorrichtung bei Nichtbedarf völlig vom Antrieb getrennt, sie erzeugt keine Verluste und keine unerwünschte Wärme mehr. Die Zu- und Abschaltung erfolgt präzise und verzögerungsfrei, entweder automatisch in Abhängigkeit von bestimten Fühlern oder manuell. Die erfindungsgemäße Heizvorrichtung baut sehr kompakt und kann sowohl am Motorblock als auch am Fahrzeug selbst an beliebiger Stelle befestigt werden. Die an das Kühlmedium abgegebene Wärme kann entweder - bei flüssigkeitsgekühlten Brennkraftmaschinen - an das Kühlwasser abgeführt oder - bei anderen Antrieben - einem geeigneten Wärmetauscher für die Beheizung des Fahrgastraumes zugeführt werden. Ein weiterer Vorteil der erfindungsgemäßen Heizvorrichtung besteht schließlich darin, daß die Heizleistung bzw. die Wärmeentwicklung in der Arbeitskammer mit zunehmender Antriebsdrehzahl degressiv ansteigt (und nicht progressiv wie z. B. bei einer hydrodynamischen Bremse nach dem Stand der Technik), weil infolge der Temperaturerhöhung in der Arbeitskammer die Zähigkeit des Öles abnimmt - und damit auch die Flüssigkeitsreibung, die die Wärme erzeugt. Dadurch paßt sich die Heizleistung der Kühlmitteltemperatur an, und der Motor wird bei höheren Drehzahlen weniger belastet.

Vorteilhafte Weiterbildungen der Erfindung ergeben sich aus den Unteransprüchen. Gemäß Anspruch 2 bis 4 ist für die Schaltkupplung eine Elektromagnetkupplung vorgesehen, die ein zuverlässiges und trägheitsloses Ein- und Abschalten der Heizvorrichtung erlaubt. Vorteilhafterweise kann der Magnet innerhalb der Riemenscheibe angeordnet werden und eine Ankerplatte beaufschlagen, die stirnseitig von der Riemenscheibe angeordnet und mit der Rotorwelle verbunden ist. Dadurch ergibt sich eine kompakte Bauweise für die gesamte Heizvorrichtung einschließlich Antrieb.

Gemäß Anspruch 5 ist der Rotor als Scheibe ausgebildet, was eine einfach herzustellende und axial kurz bauende Heizvorrichtung ermöglicht und gleichzeitig eine glatte, ebene oder berippte, aber wirksame Kühlfläche auf der Außenseite der Arbeitskammer schafft. Die Wärme, die infolge Flüssigkeitsreibung in der Arbeitskammer entsteht, wird somit direkt stirnseitig über die Zwischenwand an das Kühlmedium abgegeben. Um die wärmeerzeugende Fläche zu vergrößern, kann der Rotor gemäß Anspruch 6 auch in axialer Richtung verlängert werden, so daß auch die zylindrische Umfangsfläche wirkam an der Wärmeerzeugung durch Flüssigkeitsreibung teilnimmt. Ein solcher Rotor läßt sich gemäß Anspruch 7 vorteilhaft auch in Kunststoff herstellen, was die Herstellkosten verbilligt.

Gemäß Anspruch 8 bis 12 kann die Zwischenwand, d.h. die wärmeabgebende Fläche zur Erhöhung des Wärmedurchgangs und -übergangs unterschiedlich gestaltet sein: Nach Anspruch 8 ist sie im wesentlichen eben, was besonders einfach herstellbar ist. Bei einem breiteren Rotor (Zylinder) kann sie auch zusätzlich zylinderförmig sein. Zur Erhöhung des Wärmeüberganges sind gemäß Anspruch 10 vorteilhafterweise Kühlrippen bzw. Kühlkanäle auf der Wasserseite vorgesehen. Gemäß Anspruch 11 ist es auch vorteilhaft, daß die Kühlkammer und die Arbeitskammer nicht direkt gegeneinander, sondern jeweils nach außen separat abgedichtet sind. Dadurch wird im Falle einer Undichtigkeit verhindert, daß sich die viskose Flüssigkeit mit der Kühlflüssigkeit mischt.

Nach einer weiteren vorteilhaften Ausbildung der Erfindung gemäß Anspruch 12 kann die Kühlkammer auch um die Arbeitskammer herum angeordnet sein, d.h. sie setzt sich aus einem stirnseitigen, einem rückwärtigen und einem umfangseitigen Kühlspalt zusammen. Dadurch sind wärmeaufnehmende und wärmeabgebende Flächen aneinander angepaßt.

Schließlich ist in vorteilhafter Weiterbildung der Erfindung gemäß Anspruch 13 eine elastische Membran zwischen der Arbeitskammer und der Luftseite (oder auch der Kühlwasserseite) vorgesehen, die eine temperaturbedingte Ausdehnung des viskosen Mediums in einen Ausdehnungsraum ermöglicht - letzterer kann über einen Entlüftungskanal mit der Atmosphäre verbunden sein. Die bewegliche Membran kann vorzugsweise zwischen der Arbeitskammer und dem Lager angeordnet sein, wo sich auch ein entsprechender Ausdehnungsraum ergibt, aber auch an anderer Stelle, z.B. auf der Stirnseite der Zwischenwand oder auch im Rotor. Durch diese Maßnahme wird der temperaturbedingten Ausdehnung der viskosen Flüssigkeit Rechnung getragen, und die vollständige Befüllung der Arbeitsspalte wird damit gewährleistet.

Zwei Ausführungsbeispiele der Erfindung sind in der Zeichnung dargestellt und werden im folgenden näher beschrieben:

Es zeigen
**Fig. 1** eine Heizvorrichtung mit einer einfachen Kühlkammer
   und
**Fig. 2** eine Heizvorrichtung mit einer vergrößerten Kühlkammer.

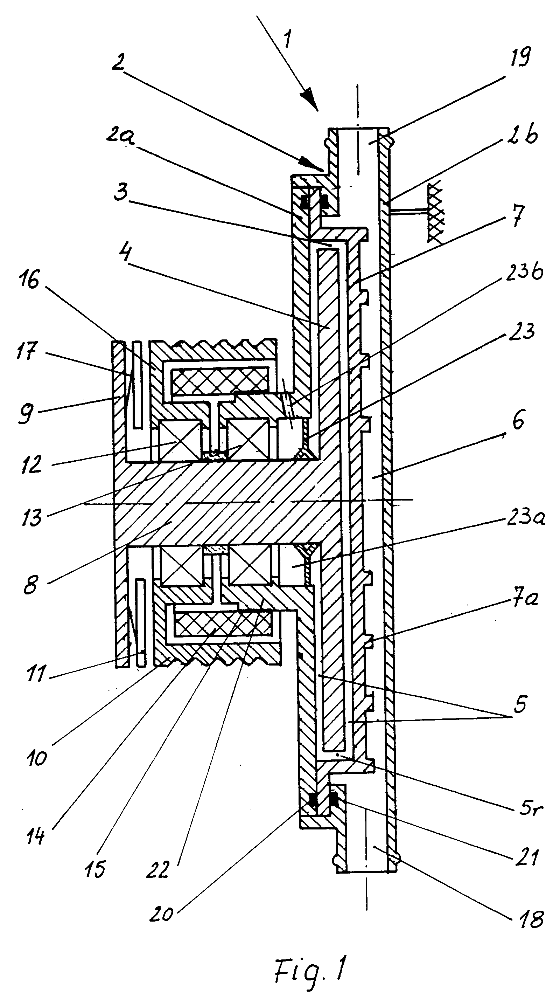

**Fig. 1** zeigt die erfindungsgemäße Heizvorrichtung 1, die ein am Fahrzeug oder am Motor befestigtes Gehäuse 2, also ein ortsfestes Gehäuse aufweist (die Befestigung ist hier symbolisch dargestellt). Dieses ortsfeste Gehäuse 2 weist eine Arbeitskammer 3, in welcher ein scheibenförmig ausgebildeter Rotor 4 umläuft, und ferner eine Kühlkammer 6 auf, die von Kühlmittel durchströmt wird, welches durch einen Eintrittsstutzen 18 eintritt und einen Austrittsstutzen 19 wieder austritt. Das gesamte Gehäuse ist hier aus im wesentlichen drei Teilen zusammengesetzt, und zwar aus einem Gehäusedeckel 2a, einem Gehäuseboden 2b und einer Zwischenwand 7, welche gegenüber dem Deckel 2a und dem Boden 2b beidseitig über Dichtungsringe 20 und 21 abgedichtet ist. Der Rotor 4 ist auf einer Antriebswelle 8 befestigt, welche über ein Kugellager 13 gegenüber dem Gehäuse 2 gelagert ist, und zwar über einen Lageransatz 22 am Gehäusedeckel 2a. Auf der Antriebswelle 8 ist ein weiteres Lager 12 angeordnet, welches über eine Nabe 16 eine Keilriemenscheibe 10 trägt, welche über einen nicht dargestellten Keilriemen vom Motor des Fahrzeuges angetrieben wird. Stirnseitig von dieser Riemenscheibe 10 ist eine Ankerplatte 11 angeordnet, welche über Mitnehmer 17 mit einem Flansch 9 der Antriebswelle 8 verbunden ist. Innerhalb der hohl ausgebildeten Riemenscheibe 10 befindet sich ein ringförmiger Magnet 14, der über einen Festsitz 15 gegenüber dem Gehäuse 2, d.h. auf dessen Lageransatz 22 gehalten ist. Dieser Elektromagnet wird durch nicht dargestellte Leitungen ein- oder ausgeschaltet. Die Arbeitskammer 3 ist mit einer viskosen Flüssigkeit, beipielsweise handelsüblichem Silikonöl, gefüllt, und zwar vollständig, so daß sowohl der vordere und der hintere Arbeitsspalt 5 als auch der radiale Ringspalt 5r mit viskoser Flüssigkeit gefüllt sind. Die Arbeitskammer 3 ist zur Luftseite hin durch eine Membran 23 abgedichtet, die zwischen dem Lageransatz 22 und der Rotorwelle 8 angeordnet ist. Zwischen Mebran 23 und dem Kugellager 13 befindet sich ein Ausgleichsraum 23a, in welchen die elastisch ausgebildete Membran 23 bei Ausdehnung der viskosen Flüssigkeit infolge Temperturänderng ausweichen kann. Zu diesem Zweck ist ferner eine Entlüftungsbohrung 23b im Gehäuseansatz 22 angeordnet, die eine Verbindung des Ausgleichsraumes 23a mit der Atmosphäre 23b herstellt.

Die Funktion dieser Heizvorrichtung ist folgende: Bei Heizbedarf für das Fahrzeug wird die Elektromagnetkupplung, bestehend aus Ringmagnet 14 und stirnseitig von der Keilriemenscheibe 10 angeordneter Ankerplatte 11, betätigt, so daß die Ankerplatte 11 an die Keilriemenscheibe 10 angezogen wird und deren Drehmoment kraftschlüssig überträgt, und zwar über die axial beweglichen Mitnehmer 17 auf den Flansch 9, die Antriebswelle 8 und auf die Rotorscheibe 4. Damit stellt sich infolge des feststehenden Gehäuses 2 eine Relativdrehzahl zwischen Rotor 4 und Gehäuse 2 ein, die zur Erwärmung der viskosen Flüssigkeit in der Arbeitskammer 3 infolge Flüssigkeitsreibung führt. Diese Wärme wird über die wärmeleitende Zwischenwand 7 an die Kühlflüsigkeit abgegeben, die die Kühlkammer 6 durchströmt. Diese Kühlflüssigkeit kann einem für die Heizung des Fahrgastraumes vorgesehenen (nicht dargestellten) Heizkörper des Fahrzeuges zugeführt werden. Besteht kein Bedarf mehr für die Heizung, wird der Magnet 14 abgeschaltet, die Ankerplatte 11 fällt von der Riemenscheibe 10 ab, und der Kraftfluß zwischen motorseitigem Antrieb und Rotor 4 ist unterbrochen - der Rotor 4 steht.

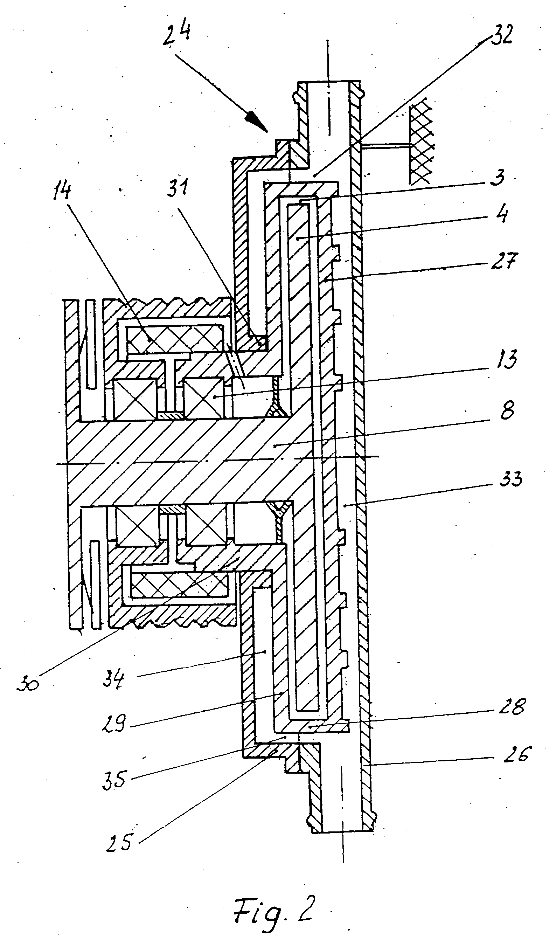

**Fig. 2** zeigt ein weiteres Ausführungsbeispiel, bei dem gleiche Teile mit gleichen Bezugsziffern wie in Fig. 1 bezeichnet sind. Unterschiedlich ist nur das Gehäuse 24, welches ebenfalls aus einem Gehäusedeckel 25 und einem Gehäuseboden 26 zusammengesetzt ist, welche in diesem Falle direkt miteinander verbunden und abgedichtet sind und somit die Kühlkammer 32 in sich einschließen. Innerhalb des Gehäuses 24 befindet sich ein weiteres Gehäuse in Form einer Hohlscheibe, die durch eine vordere, ebene Stirnwand 27 und eine rückseitige Wand 29 sowie eine zylinderförmige Umfangswand 28 gebildet wird. Diese Hohlscheibe, die die Arbeitskammer 3 für das viskose Medium bildet, ist über eine Nabe 30 in einem Gehäuseansatz 31 befestigt, abgedichtet und nimmt andererseits das Lager 13 für die Lagerung der Antriebswelle 8 auf. Damit ergibt sich bei diesem Ausführungsbeispiel eine vergrößerte Kühlkammer 32, die sich aus drei Teilräumen, nämlich dem vorderen, stirnseitigen Kühlspalt 33, dem hinteren Kühlspalt 34 und dem umfangseitigen Kühlspalt 35 zusammensetzt. Dadurch wird eine größere Kühlfläche geschaffen, die die Arbeitskammer 3 vollständig umgibt, so daß die dort entstehende Wärme direkt über die Wandung der Hohlscheibe an das Kühlmedium abgeführt werden kann. Damit ergibt sich ein verbesserter Wirkungsgrad für diese Heizvorrichtung, die im übrigen dieselbe Funktion hat, wie oben für Fig. 1 beschrieben.

### Bezugszeichenliste

**Fig. 1**
   - 1: Heizvorrichtung (gesamt)
   - 2: Gehäuse (motorfest)
   - 3: Arbeitskammer (Visco)
   - 4: Rotor
   - 5: Spalt (Visco), plan//5r, Ringspalt
   - 6: Kühlkammer
   - 7: Zwischenwand // 7a Kühlrippe
   - 8: Rotorwelle
   - 9: Flansch
   - 10: Keilriemenscheibe (KRS)
   - 11: Ankerplatte
   - 12: 1. Kugellager (KRS), l.
   - 13: 2. Kugellager (Gehäuse), r.
   - 14: Elektromagnet
   - 15: Festsitz
   - 16: Nabe von KRS
   - 17: Mitnehmer
   - 18: Eintrittsstutzen
   - 19: Austrittsstutzen
   - 20: Dichtungsring
   - 21: Dichtungsring
   - 22: Lageransatz / Gehäusenabe
   - 23: Membran
   - 23a: Ausdehnungsraum
   - 23b: Entlüftungsbohrung
**Fig. 2**
   - 24: Gehäuse (gesamt)
   - 25: Gehäusedeckel
   - 26: Gehäuseboden
   - 27: Zwischenwand, Stirnseite
   - 28: Zylinderwand
   - 29: Zwischenwand, Rückseite Hohlscheibe
   - 30: Nabe (Lagersitz)
   - 31: Gehäusenabe
   - 32: Kühlkammer
   - 33: Kühlspalt, Stirnseite, axial
   - 34: Kühlspalt, Rückseite, axial
   - 35: Kühlspalt, Umfang, radial

## Patentansprüche

1. Heizvorrichtung, insbesondere für Kraftfahrzeuge mit Motor, bestehend aus einem ortsfesten Gehäuse (2) mit einer mit viskoser Flüssigkeit füllbaren Arbeitskammer (3), in der ein vom Motor angetriebener Rotor (4) umläuft und mit der Innenwand der Arbeitskammer (3) mindestens einen Spalt (5) bildet, und mit einer von Kühlflüssigkeit durchströmten Kühlkammer (6), die mit der Arbeitskammer (3) über eine Zwischenwand (7) wärmeleitend verbunden ist, **dadurch gekennzeichnet**, daß die Arbeitskammer (3) als geschlossene Kammer ausgebildet ist, die vollständig mit der viskosen Flüssigkeit gefüllt ist, und daß der Antrieb des Rotors (4) über eine schaltbare Kupplung (11, 14) erfolgt.

2. Heizvorrichtung nach Anspruch 1, **dadurch gekennzeichnet**, daß die Kupplung als Elektromagnetkupplung (14) ausgebildet ist.

3. Heizvorrichtung nach Anspruch 1 oder 2, **dadurch gekennzeichnet**, daß die Elektromagnetkupplung (14) eine Ankerplatte (11) aufweist, die in Kraftflußrichtung zwischen einer motorseitig angetriebenen Riemenscheibe (10) und einer Antriebswelle (8) für den Rotor (4) angeordnet ist.

4. Heizvorrichtung nach Anspruch 2 oder 3, **dadurch gekennzeichnet**, daß die Elektromagnetkupplung einen Ringmagneten (14) aufweist, der innerhalb der Keilriemenscheibe (10) angeordnet und über einen Festsitz (15) am Gehäuse (2) befestigt ist.

5. Heizvorrichtung nach einem der vorhergehenden Ansprüche **dadurch gekennzeichnet**, daß der Rotor (4) als Scheibe ausgebildet ist und mit der Arbeitskammer (3) einen vorderen und einen hinteren Planspalt (5) bildet.

6. Heizvorrichtung nach einem der Ansprüche 1 bis 4, **dadurch gekennzeichnet**, daß der Rotor (4) als Zylinder ausgebildet ist, der mit der Arbeitskammer (3) einen vorderen und einen hinteren Planspalt (5) sowie einen radialen Ringspalt (5r) bildet.

7. Heizvorrichtung nach Anspruch 5 oder 6, **dadurch gekennzeichnet**, daß der Rotor (4) als massives Kunststoffteil ausgebildet ist.

8. Heizvorrichtung nach einem der Ansprüche 1 bis 7, **dadurch gekennzeichnet**, daß die Zwischenwand (7) zwischen der Arbeitskammer (3) und der Kühlkammer (6) eben und parallel zur Planfläche des Rotors (4) ausgebildet und von Kühlflüssigkeit bespült ist.

9. Heizvorrichtung nach einem der Ansprüche 6 oder 7, **dadurch gekennzeichnet**, daß die Zwischenwand (7) eben und zylinderförmig ausgebildet ist.

10. Heizvorrichtung nach einem der vorhergehenden Ansprüche, **dadurch gekennzeichnet**, daß die Zwischenwand (7) auf der Kühlwasserseite Kühlrippen (7a) aufweist.

11. Heizvorrichtung nach einem der vorhergehenden Ansprüche, **dadurch gekennzeichnet**, daß die Zwischenwand als separates Teil (7) des Gehäuses (2) ausgebildet ist und zwischen zwei Gehäusehälften (2a, 2b) eingelegt und mittels beidseitig angeordneter Dichtungen (20, 21) abgedichtet ist.

12. Heizvorrichtung nach einem der vorhergehenden Ansprüche 1 bis 7, **dadurch gekennzeichnet**, daß die Zwischenwand als den Rotor (4) umfassende Hohlscheibe (27, 28, 29) ausgebildet ist, die mit der Innenwand des Gehäuses (24) die Kühlkammer (32) bildet, die aus einem vorderen, einem hinteren und einem umfangseitigen Kühlspalt (33, 34, 35) besteht.

13. Heizvorrichtung nach einem der vorhergehenden Ansprüche, **dadurch gekennzeichnet**, daß die Arbeitskammer (3) über eine bewegliche Membran (23) abgedichtet ist, welche eine Ausdehnung der viskosen Flüssigkeit in einen Ausdehnungsraum (23a) zuläßt.

## Claims

1. A heating device, in particular for utility vehicles with an engine, having a permanently fixed housing (2) with a working chamber (3) which can be filled with a viscous fluid, in which a rotor (4) driven by the motor rotates and forms at least one slit (5) in conjunction with the internal wall of the working chamber (3), and having a cooling chamber (6), through which coolant is circulated, connected to the working chamber (3) so as to conduct heat by means of a dividing wall (7), **characterised in that** the working chamber (3) is a closed chamber which is completely filled with the viscous fluid and the rotor (4) is driven via a clutch (11, 14).

2. A heating device as claimed in claim 1, **characterised in that** the clutch is an electromagnetic clutch (14).

3. A heating device as claimed in claim 1 or 2, **characterised in that** the electromagnetic clutch (14) has an anchoring plate (11), which is arranged between a driven belt pulley (10) at the engine end and a drive shaft (8) for the rotor (4) in the direction of power flow.

4. A heating device as claimed in claim 2 or 3, **characterised in that** the electromagnetic clutch has an annular magnet (14), which is arranged inside the V-belt pulley (10) and secured onto the housing (2) by a driving fit (15).

5. A heating device as claimed in one of the preceding claims, **characterised in that** the rotor (4) is a disk and forms a front and a rear planar slit (5) with the working chamber (3).

6. A heating device as claimed in one of claims 1 to 4, **characterised in that** the rotor (4) is a cylinder, which forms a front and a rear planar slit (5) and a radial annular slit (5r) with the working chamber (3).

7. A heating device as claimed in claim 5 or 6, **characterised in that** the rotor (4) is a solid component of synthetic material.

8. A heating device as claimed in one of claims 1 to 7, **characterised in that** the dividing wall (7) between the working chamber (3) and the cooling chamber (6) is flat and parallel with the planar surface of the rotor (4) and is flushed with coolant fluid.

9. A heating device as claimed in one of claims 6 or 7, **characterised in that** the dividing wall (7) is flat and cylindrical.

10. A heating device as claimed in one of the preceding claims, **characterised in that** the dividing wall (7) has cooling fins (7a) on the coolant water side.

11. A heating device as claimed in one of the preceding claims, **characterised in that** the dividing wall is provided as a separate part (7) of the housing (2) and is inserted between two housing halves (2a, 2b) and sealed by means of gaskets (20, 21) arranged on either side.

12. A heating device as claimed in one of the preceding claims 1 to 7, **characterised in that** the dividing wall is provided as a hollow disk (27, 28, 29) enclosing the rotor (4), forming, with the internal wall of the housing (24), the cooling chamber (32), consisting of a front, a rear and a peripheral-end cooling slit (33, 34, 35).

13. A heating device as claimed in one of the preceding claims, **characterised in that** the working chamber (3) is sealed by a displaceable membrane (23), which allows the viscous fluid to expand in an expansion chamber (23a).

## Revendications

1. Dispositif de chauffage, notamment pour véhicules automobiles comportant un moteur, constitué par un boîtier fixe (2) comportant une chambre de travail (3), qui peut être remplie par un liquide visqueux et dans laquelle un rotor (4) entraîné par le moteur tourne et forme au moins une fente (5) avec la paroi intérieure de la chambre de travail (3), et une chambre de refroidissement (6), qui est parcourue par du liquide de refroidissement et est reliée d'une manière thermoconductrice à la chambre de travail (3) au moyen d'une paroi intermédiaire (7), caractérisé en ce que la chambre de travail (3) est agencée sous la forme d'une chambre fermée, qui est complètement remplie par le liquide visqueux, et que l'entraînement du rotor (4) s'effectue au moyen d'un accouplement commutable (11, 14).

2. Dispositif de chauffage selon la revendication 1, caractérisé en ce que l'accouplement est agencé sous la forme d'un accouplement électromagnétique (14).

3. Dispositif de chauffage selon la revendication 1 ou 2, caractérisé en ce que l'accouplement électromagnétique (14) possède une plaque d'armature (11), qui est disposée dans le flux de force entre une poulie à courroie (10) qui est entraînée du côté du moteur, et un arbre d'entraînement (8) pour le rotor (4).

4. Dispositif de chauffage selon la revendication 2 ou 3, caractérisé en ce que l'accouplement électromagnétique possède un aimant annulaire (14), qui est disposé à l'intérieur de la poulie (10) pour courroie trapézoïdale et est fixé au boîtier (2) par l'intermédiaire d'un siège fixe (15).

5. Dispositif de chauffage selon l'une des revendications précédentes, caractérisé en ce que le rotor (4) est agencé sous la forme d'un disque et forme, avec la chambre de travail (3), une fente plane avant et une fente plane arrière (5).

6. Dispositif de chauffage selon l'une des revendications 1 à 4, caractérisé en ce que le rotor (4) est agencé sous la forme d'un cylindre, qui forme, avec la chambre de travail (3), une fente plane avant et une fente plane arrière (5) ainsi qu'une fente annulaire radiale (5r).

7. Dispositif de chauffage selon la revendication 5 ou 6, caractérisé en ce que le rotor (4) est agencé sous la forme d'une pièce en matière plastique massive.

8. Dispositif de chauffage selon l'une des revendications 1 à 7, caractérisé en ce que la paroi intermédiaire (7) est agencée entre la chambre de travail (3) et la chambre de refroidissement (6) selon une conformation plane et parallèle à la surface plane du rotor (4) et est balayée par un liquide de refroidissement.

9. Dispositif de chauffage selon l'une des revendications 6 ou 7, caractérisé en ce que la paroi intermédiaire (7) est agencée de manière à être unie et de forme cylindrique.

10. Dispositif de chauffage selon l'une des revendications précédentes, caractérisé en ce que la paroi intermédiaire (7) possède des nervures de refroidissement (7a) situées du côté de l'eau de refroidissement.

11. Dispositif de chauffage selon l'une des revendications précédentes, caractérisé en ce que la paroi intermédiaire est agencée sous la forme d'une pièce séparée (16) du boîtier (2) et est insérée entre deux moitiés (2a, 2b) du boîtier et étanchéifiée au moyen de garniture d'étanchéité (20,21) disposées des deux côtés.

12. Dispositif de chauffage selon l'une des revendications précédentes 1 à 7, caractérisé en ce que la paroi intermédiaire (7) est agencée sous la forme d'un disque creux (27, 28, 29), qui entoure le rotor (4) et qui forme, avec la paroi intérieure du boîtier (24), la chambre de refroidissement (32), qui est constituée par une fente avant de refroidissement, une fente arrière de refroidissement et une fente circonférentielle de refroidissement (33, 34, 35).

13. Dispositif de chauffage selon l'une des revendications précédentes, caractérisé en ce que la chambre de travail (3) est fermée de façon étanche par l'intermédiaire d'une membrane mobile (23), qui permet une expansion du liquide visqueux vers un volume d'expansion (23a).
